Europäisches Patentamt

European Patent Office

Office européen des brevets

(11) Veröffentlichungsnummer: **0 086 994**
**B1**

(12) **EUROPÄISCHE PATENTSCHRIFT**

(45) Veröffentlichungstag der Patentschrift:
**07.01.87**

(21) Anmeldenummer: **83100843.8**

(22) Anmeldetag: **29.01.83**

(51) Int. Cl.⁴: **G 01 N 31/16**

(54) **Karl-Fischer-Reagenz und Verfahren zur Bestimmung von Wasser mit Hilfe dieses Reagenzes.**

(30) Priorität: **12.02.82 DE 3204962**

(43) Veröffentlichungstag der Anmeldung:
**31.08.83 Patentblatt 83/35**

(45) Bekanntmachung des Hinweises auf die Patenterteilung:
**07.01.87 Patentblatt 87/2**

(84) Benannte Vertragsstaaten:
**AT BE CH DE FR GB IT LI NL SE**

(56) Entgegenhaltungen:
**EP - A - 0 035 066**
**EP - A - 0 036 487**
**EP - A - 0 054 713**

**LABORPRAXIS, März 1981, E. SCHOLZ**
**"Karl-Fischer-Reagenzien ohne Pyridin", Seiten 124, 126**
**ANALYTICA CHIMICA ACTA, Band 94, 1977, Amsterdam, J.C. VERHOEF et al. "Mechanism and reaction rate of the Karl Fischer titration reaction", Seiten 395-403**

**Die Akte enthält technische Angaben, die nach dem Eingang der Anmeldung eingereicht wurden und die nicht in dieser Patentschrift enthalten sind.**

(73) Patentinhaber: **Merck Patent Gesellschaft mit beschränkter Haftung, Frankfurter Strasse 250, D-6100 Darmstadt (DE)**

(72) Erfinder: **Fischer, Wolfgang, Dr., Kröhweg 27, D-6100 Darmstadt (DE)**
Erfinder: **Seitz, Georg, Dr., Mozartweg 55, D-6100 Darmstadt (DE)**
Erfinder: **Krenn, Karl-Dieter, Zieglerstrasse 41, D-6102 Pfungstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein modifiziertes Karl-Fischer-Reagenz zur Bestimmung von Wasser, das ein Salz, Schwefeldioxid und Jod enthält, sowie ein Verfahren zur Bestimmung von Wasser mit Hilfe dieses Reagenzes.

Aus der Literatur ist eine Reihe von Vorschlägen bekannt, Pyridin im Karl-Fischer-Reagenz durch andere Substanzen zu ersetzen. In Anal. Chim. Acta 94, 395 (1977) wird Natriumacetat als Ersatz für Pyridin verwendet. Dieser Ersatz bringt jedoch gewisse Nachteile mit sich. Es bildet sich z.B. mit dem als Lösungsmittel verwendeten Alkohol Essigsäureester, wobei Wasser frei wird, das bei einer Wasserbestimmungsmethode naturgemäss stört. Die Lösungen sind deshalb nicht stabil, ihr Blindwert nimmt stetig zu.

Im GB-Patent 728 947 sind ausser Acetaten auch Alkoholate, Phenolate und Metallsalze schwacher organischer Säuren als Ersatz für Pyridin genannt. Die Überprüfung der in der Patentschrift genannten Substanzen ergab, dass diese als Pyridinersatz ungeeignet sind, teils wegen nicht ausreichender Löslichkeit, teils wegen nicht genügender Stabilität der Fertiglösungen. Weiter ist bekannt, dass bei Ersatz von Pyridin durch Amine keine stabilen Endprodukte bei der Titration zu erhalten sind (Anal. Chem. 28, 1166 (1956)).

Um diese Nachteile zu umgehen, wurde in neuester Zeit versucht, Pyridin durch aliphatische Amine in einem bestimmten Molverhältnis zu Schwefeldioxid (DE-A-3 010 436) oder auch durch heterocyclische Verbindungen zu ersetzen (EP-A.35 066). Aber auch dieser Pyridinersatz lieferte nicht die gewünschten Resultate, weil die Stabilität des Endpunktes mit der Menge des zu titrierenden Wassers schwankt.

Aus Labor Praxis, März 1981, Seiten 124 und 126, ist bekannt, dass sich aus Aminen durch Zusatz von Essigsäure oder durch die Verwendung von Acetaten Zweikomponentenreagenzien herstellen lassen, die relativ gute Titriereigenschaften zeigen. An gleicher Stelle ist jedoch ausgeführt, dass solche Reagenzformulierungen für die Praxis ungeeignet sind, weil sie sich aufgrund der Wasserbildung aus Essigsäure und Methanol selbst zerstören; auch acetathaltige Einkomponentenreagenzien sind danach nicht herstellbar, weil sie sich innerhalb von Tagen zersetzen.

Der Erfindung lag die Aufgabe zugrunde, ein modifiziertes Kar-Fischer-Reagenz zur Verfügung zu stellen, das stabil ist, exakte Analysenergebnisse liefert und einen möglichst stabilen Endpunkt auch bei variabler Wassermenge zeigt.

Überraschenderweise wurde gefunden, dass ein solches Karl-Fischer-Reagenz erhalten werden kann, wenn anstelle von Pyridin im herkömmlichen Karl-Fischer-Reagenz ein Salz einer stickstoffhaltigen Verbindung mit einer aromatischen Carbonsäure verwendet wird. Diese Substanzen sind in der Reagenzlösung sehr gut löslich, reagieren mit Alkoholen praktisch nicht unter Esterbildung, sind sehr lagerstabil und zeigen stabile Endpunkte auch bei der Titration über einen grossen Wasserbereich.

Ein zusätzlicher Einsatz von Säuren im Karl-Fischer-Reagenz wird zwar auch in der EP-A-35 066 erwähnt, jedoch liefern die genannten Säuren keine für das erfindungsgemässe Reagenz brauchbaren Salze (bei Verwendung von Schwefelsäure, Jodwasserstoffsäure) oder das Reagenz wird durch den Säure-Zusatz instabil (bei Verwendung von Ameisensäure, Oxalsäure, Essigsäure).

Gegenstand der Erfindung ist ein Karl-Fischer-Reagenz gemäss Anspruch 1.

Ferner betrifft die Erfindung ein Verfahren zur Bestimmung von Wasser mit Hilfe des genannten Karl-Fischer-Reagenzes.

Das erfindungsgemässe Karl-Fischer-Reagenz besteht entweder aus zwei Lösungen, einem Lösemittel und einem Titriermittel, oder aus einer sogenannten Einmallösung, die alle Bestandteile in einer einzigen Lösung enthält. Das Lösemittel enthält Schwefeldioxid und das Salz in einem Lösungsmittel und dient zur Aufnahme der auf ihren Wassergehalt zu untersuchenden Probe. Das Titriermittel ist eine auf einen konstanten Titer eingestellte Lösung von Jod in einem Lösungsmittel. Lösemittel und Titriermittel können aber auch, wie bereits erwähnt, als Einmallösung vorliegen. Diese ist ausreichend stabil, um in üblicher Weise als Titrierflüssigkeit eingesetzt zu werden. Die Einmallösung ist besonders dann von Vorteil, wenn die zu untersuchende Substanz in einem anderen Lösungsmittel besser löslich ist als in dem im Lösemittel enthaltenen Lösungsmittel. In diesem Fall ist auch die Reaktionsgeschwindigkeit nicht von der Lösegeschwindigkeit abhängig.

Zur Salzbildung geeignete organische Basen nach der Erfindung sind Diethanolamin, Triethanolamin und Imidazol.

Die geeignete schwache Säure ist Benzoesäure.

Das erfindungsgemässe Reagenz enthält als Salz Diethanolammoniumbenzoat, Triethanolammoniumbenzoat oder Imidazoliumbenzoat.

Das molare Verhältnis von Salz zu Schwefeldioxid liegt im Bereich von 10:1 bis 1:1, vorzugsweise von 3:1 bis 1:1.

Als Lösungsmittel sowohl für das Löse- als auch für das Titriermittel eignen sich alle in der Literatur zu diesem Zweck beschriebenen Lösungsmittel, vorzugsweise Alkohole und/oder Glykole, insbesondere niedere Alkohole wie Methanol, Ethanol, Propanol usw. sowie Ethylenglykol und Ethylenglykolmonoalkylether. Die Lösungsmittel können einzeln oder in einem beliebigen Mischungsverhältnis verwendet werden. So ist es z.B. möglich, das erfindungsgemässe Salz in einem Alkohol oder in einem Glykol oder in einem beliebigen Mischungsverhältnis von Alkoholen, Glykolen oder Mischungen beider Lösungsmitteltypen zu lösen, mit der notwendigen Menge Schwefeldioxid zu versetzen und im Falle der sogenannten Einmallösung noch zusätzlich Jod hinzuzugeben.

Durch die Verwendung der erfindungsgemässen Salze ergeben sich eine Reihe von Vorteilen: Der Umschlag am Äquivalenzpunkt ist deutlicher und stabiler als mit den herkömmlichen Karl-Fischer-Reagenzien; das Reagenz hat eine bessere Löslichkeit und damit eine grössere Anwendungsbreite, es ist insgesamt umweltfreundlich und billig.

Mit dem erfindungsgemässen Karl-Fischer-Reagenz kann der Endpunkt der massanalytischen Wasserbestimmung visuell, photometrisch oder elektrometrisch (Dead-Stop-Methode, coulometrische Methode) bestimmt werden. Das Reagenz eignet sich sowohl für den Einsatz im Titrierautomaten als auch als Feldmethode, wobei die Feldmethode durch den Ersatz des Methanols durch die genannten Lösungsmittel mit niedrigem Dampfdruck überhaupt erst ermöglicht wurde.

Die Titration erfolgt generell unter Ausschluss von Luftfeuchtigkeit. Bevorzugt ist heute die elektrometrische Titration, insbesondere die sogenannte Dead-Stop-Methode. Dieses Verfahren beruht auf einer bewusst erzeugten Polarisation an zwei gleichen Platinelektroden. Beim Anlegen einer geringen Potentialdifferenz wird die durch die Polarisation entstehende Spannung kompensiert und der Stromfluss unterbrochen. Der Endpunkt der Titration wird durch einen starken Ausschlag des Galvanometers mit anschliessendem unverändertem Verharren angezeigt, was auf dem scharfen Übergang von Polarisation oder Depolarisation einer Elektrode zur vollständigen Depolarisation oder Polarisation beider Elektroden beruht.

Die Erfindung wird durch die folgenden Beispiele näher erläutert.

### Beispiel 1

Zur Herstellung des Lösemittels und des Titriermittels wurden die jeweiligen Substanzen in dem entsprechenden Lösungsmittel gelöst:

a) Lösemittel
341 g Diethanolammoniumbenzoat (1,5 M) und
64 g Schwefeldioxid (1 M) in
1 l Methanol
b) Titriermittel
50 g Jod in
1 l Methanol

Die auf ihren Wassergehalt zu untersuchende Substanz wurde je nach dem geschätzten Wassergehalt in 20 ml des Lösemittels gelöst und mit dem Titriermittel unter ständigem Rühren unter Ausschluss von Luftfeuchtigkeit bis zum Endpunkt titriert.

### Beispiel 2

Es wurden folgende Karl-Fischer-Lösungen hergestellt:

a) Lösemittel
407 g Triethylammoniumbenzoat (1,5 M) und
32 g Schwefeldioxid (0,5 M) in
1 l Ethylenglykolmonomethylether
b) Titriermittel
50 g Jod in
1 l Ethylenglykolmonomethylether

Mit diesen Lösungen wurden die gleichen Ergebnisse erzielt wie mit den Lösungen nach Beispiel 1. Die Ergebnisse änderten sich auch nicht nach teilweisem oder vollständigem Ersatz des Ethylenglykolmonomethylethers durch Methanol.

### Beispiel 3

Es wurden folgende Karl-Fischer-Lösungen hergestellt:

a) Lösemittel
143 g Imidazoliumbenzoat (0,75 M) und
32 g Schwefeldioxid (0,5 M) in
0,5 l Ethylenglykolmonomethylether
b) 50 g Jod in
1 l Methanol

Mit diesen Lösungen wurden die gleichen Ergebnisse erzielt wie mit den Lösungen nach den Beispielen 1 und 2.

### Beispiel 4

Es wurde eine Einmallösung hergestellt aus
286 g Imidazoliumbenzoat (1,5 M),
64 g Schwefeldioxid (1 M) und
70 g Jod in
0,5 l Ethylenglykolmonomethylether

Die auf ihren Wassergehalt zu untersuchende Substanz wurde in 20 ml eines Lösungsmittels gelöst und mit der Einmallösung titriert. 1 ml dieser Lösung entspricht etwa 6 mg Wasser.

### Beispiel 5

Es wurde eine Einmallösung hergestellt aus
341 g Diethanolammoniumbenzoat (1,5 M),
64 g Schwefeldioxid (1 M) und
70 g Jod in
1 l Ethylenglykolmonomethylether

Die auf ihren Wassergehalt zu untersuchende Substanz wurde in 20 ml eines Lösungsmittels gelöst und mit der Einmallösung titriert. 1 ml dieser Lösung entspricht etwa 3 mg Wasser.

**Patentansprüche**

1. Karl-Fischer-Reagenz, bestehend entweder aus zwei Lösungen, einem Lösemittel und einem Titriermittel, oder aus einer sogenannten Einmallösung, die alle Bestandteile in einer einzigen Lösung enthält, zur Bestimmung von Wasser, enthaltend ein Salz, Schwefeldioxid und Jod, dadurch gekennzeichnet, dass das Salz Diethanolammoniumbenzoat, Triethanolammoniumbenzoat oder Imidazoliumbenzoat ist.

2. Verfahren zur Bestimmung von Wasser mit Hilfe des Karl-Fischer-Reagenzes nach Anspruch 1.

**Claims**

1. Karl-Fischer reagent comprising either two solutions, a dissolving agent and a titrating agent, or a so called all-in-one solution which contains all the constituents in a single solution, for the determination of water, containing a salt, sulfur dioxide and iodine, characterised in that the salt is diethanolammonium benzoate, triethanolammonium benzoate or imidazolium benzoate.

2. Procedure for the determination of water using the Karl-Fischer reagent according to Claim 1.

## Revendications

1. Réactif de Karl Fischer pour le dosage de l'eau, consistant soit en deux solutions, un solvant et un réactif de titrage, soit en une solution «une fois» contenant tous les constituants dans une seule solution, contenant un sel, de l'anhydride sulfureux et de l'iode, caractérisé en ce que le sel consiste en benzoate de diéthanolammonium, benzoate de triéthanolammonium ou benzoate d'imidazolium.

2. Procédé pour le dosage de l'eau à l'aide du réactif de Karl Fischer selon la revendication 1.